# EUROPÄISCHE PATENTSCHRIFT

(11) **EP 1 009 942 B1**
(45) Veröffentlichungstag und Bekanntmachung des Hinweises auf die Patenterteilung: **23.10.2002**
(21) Anmeldenummer: 98945176.0
(22) Anmeldetag: 07.08.1998
(51) Int. Cl.: F16H 61/30, F16H 63/20

(54) **SCHALTVORRICHTUNG FÜR EIN ZAHNRÄDERWECHSELGETRIEBE**
SHIFT ACTUATOR FOR A CHANGE SPEED GEAR
ACTIONNEUR LINEAIRE ET ROTATIF POUR CHANGEMENT DE VITESSE

(30) Priorität: 27.08.1997 DE 19737305
(43) Veröffentlichungstag der Anmeldung: 21.06.2000
(73) Patentinhaber: DaimlerChrysler AG, 70567 Stuttgart (DE)
(72) Erfinder: STENGEL, Martin, D-73660 Urbach (DE); WÖRNER, Günter, D-71394 Kernen (DE)
(86) Internationale Anmeldenummer: EP9805020
(87) Internationale Veröffentlichungsnummer: WO99010665

(56) Entgegenhaltungen:
- EP-A- 0 828 099
- DE-C- 19 527 893
- US-A- 4 297 910
- US-A- 5 357 821

## Beschreibung

Die Erfindung bezieht sich auf eine Schaltvorrichtung für ein Zahnräderwechselgetriebe der im Oberbegriff des Patentanspruches 1 erläuterten Art.

Eine solche Schaltvorrichtung nach dem Oberbegriff von Patentanspruch 1 ist Gegenstand der nicht vorveröffentlichten EP 0 828 099 A2.

Bei dieser Schaltvorrichtung für ein Zahnräderwechselgetriebe sind ein Schalt-Stellglied, ein Wähl-Stellglied, ein ausschließlich axial verschiebbar gegenüber einem Gehäuse angeordnetes Stellglied, ein Hilfsgetriebe zur Umwandlung einer Drehbewegung in eine hin- und hergehende Bewegung, eine mit dem Wähl-Stellglied verbundene Bremse sowie eine ein- und ausrückbare Feststellvorrichtung wirkungsmäßig so angeordnet, dass zwei der drei Stellglieder zueinander bewegungsfest angeordnet und mit dem dritten Stellglied durch das Hilfsgetriebe verbunden sind und das Wähl-Stellglied gegenüber dem Gehäuse entweder drehfest oder axial unverschiebbar festgelegt ist.

Die der EP 0 828 099 A2 zugrunde liegende Aufgabe besteht im wesentlichen darin, bei einer Schaltvorrichtung der eingangs genannten Art ebenfalls das Überspringen von wenigstens einem dazwischen liegenden Gang bei einer Umschaltung aus einem momentanen Gang in einen neuen Gang zu ermöglichen, jedoch sollen hierbei besondere Leerwege für das Schalt-Stellglied entfallen oder weitgehend vermieden werden.

Dazu bleibt bei dieser Schaltvorrichtung das Schalt-Stellglied bei seiner Betätigung in die dem neuen Gang zugehörige Drehwinkelstellung in den Längsrichtungen der Zentralachse des Gehäuses durch die Feststellvorrichtung unbeweglich festgelegt, so dass besondere Leerwege für das Schalt-Stellglied - um das Anstoßen von Synchronisiereinrichtungen bei dieser Betätigung zu vermeiden - nicht erforderlich sind, weil die für das Anwählen der neuen Drehwinkelstellung erforderliche Linearbewegung nur noch von dem dritten, ausschließlich axial verschiebbar gegenüber dem Gehäuse angeordneten Stellglied ausgeführt werden.

Ferner zeigt die ebenfalls nicht vorveröffentlichte DE 196 10 104 A1 eine Schaltvorrichtung.

Bei dieser Schaltvorrichtung ist eine Wähl-Stellhülse konzentrisch zu einer Schalt-Stellwelle angeordnet sowie mit letzterer durch das Hilfsgetriebe in Form einer Kulisse-Kulissenstift-Anordnung verbunden, wobei die Schalt-Stellwelle durch ein stangenförmiges Stellglied mit einem Druckmittel-Stellmotor der Axialkolben-Bauart verbunden ist, während zur Betätigung der auf die Wähl-Stellhülse arbeitenden Bremse ein Elektromagnet verwendet ist. Die Wähl-Stellhülse ist gegenüber dem Gehäuse in den Längsrichtungen der Zentralachse unbeweglich festgelegt, während die Schalt-Stellwelle in ihren einer jeweiligen Schaltgasse zum Schalten von einem oder zwei Gängen zugeordneten signifikanten Drehwinkelstellungen durch eine Rasteneinrichtung verrastet ist. Bei dieser Schaltvorrichtung nach der DE 196 10 104 A1 ist bereits eine Gangschaltung aus einem momentanen Gang in einen neuen Gang unter Überspringen von wenigstens einem dazwischenliegenden Gang ermöglicht, indem die Schalt-Stellwelle in eine um die mittlere signifikante Stellung schwingende lineare Stellbewegung versetzt und dabei die Bremse der Wähl-Stellhülse beim Durchlaufen der mittleren signifikanten Stellung wechselweise ein- und ausgerückt werden. Um beim Überspringen von Gängen ein Anstoßen der diesen Gängen zugehörigen Synchronisiereinrichtungen durch die Schalt-Stellwelle zu vermeiden, ist ein bestimmter Leerweg für die Schalt-Stellwelle vorzusehen.

Aus der DE 41 37 142 A1 ist eine Schaltvorrichtung anderer Art bekannt, bei welcher ein Elektromotor durch ein Schraubgewinde zur Umwandlung einer Drehbewegung in eine hin- und hergehende Bewegung mit einer in einem Gehäuse drehbar und axial verschiebbar gelagerten Schaltstange verbunden ist, die durch eine ein- und ausrückbare Bremseinrichtung gegenüber dem Gehäuse derart fixierbar ist, daß die Schaltstange im eingerückten Zustand der Bremse ausschließlich axialverschiebbar - dagegen im ausgerückten Zustand der Bremse sowohl axialverschiebbar als auch drehbar gegenüber dem Gehäuse angeordnet ist. Die Schaltstange ist durch eine gegensinnig zur Bremse ein- und ausrückbare Kupplung direkt mit der Motorwelle des Elektromotors verbunden. Beim Wechsel zwischen Wählen und Schalten müssen sowohl Kupplung und Bremse umgesteuert als auch der Elektromotor stillgesetzt werden.

Aus der DE 43 09 027 A1 ist eine weitere Schaltvorrichtung anderer Art bekannt, bei welcher eine gegenüber einem Druckmittelzylinder drehbar und axial verschiebbar angeordnete Schaltwelle durch einen ersten Axialkolben des Druckmitelzylinders unmittelbar in den Richtungen der Schaltwellenachse zum Schalten der Gänge verlagerbar ist. Die Schaltwelle wird durch einen zweiten Axialkolben des Druckmittelzylinders unter Vermmittlung eines Hilfsgetriebes zur Umwandlung einer hin- und hergehenden Bewegung in eine Drehbewegung in bezug auf die Schaltwellenachse zu Drehbewegungen zum Wählen der Schaltgassen veranlaßt.

Die der Erfindung zugrunde liegende Aufgabe ist im wesentlichen darin zu sehen, eine eingangs genannte Schaltvorrichtung so weiter zu bilden, dass die Prozeßsicherheit des Schaltungsablaufes verbessert wird.

Die vorstehend erläuterte Aufgabe ist mit den Merkmalen des Patentanspruches 1 in vorteilhafter Weise gelöst.

Durch die stationäre Schaltkulisse, in welcher ein bewegungsfest zum Schalt-Stellglied angeordneter Kulissenstift geführt ist, wird gewährleistet, dass das Umschalten zwischen Schalten und Wählen nur in den vom inneren Aufbau des Getriebes vorgegebenen Positionen erfolgen kann. Dadurch wird die Prozeßsicherheit des Schaltungsablaufes verbessert. Darüber hinaus kann die innere Schaltung des Getriebes vereinfacht werden, indem die Rastierungselemente für Schalt- und Wählbewegung am Schalt-Stellglied entfallen können.

Die Patentansprüche 2 bis 4 und 8 bis 10 haben vorteilhafte Ausgestaltungen der Schaltvorrichtung nach der Erfindung zum Gegenstand.

Bei der Schaltvorrichtung nach der Erfindung in einer besonderen Ausführungsform nach einem der Patentansprüche 5 bis 7 ist das Anwählen der Schalt- oder Wählebene in die Funktion einer mit einem Kulissenstift des Schalt-Stellgliedes zusammenarbeitenden Wechselsperrkülisse verlagert. Abhängig von der jeweiligen Endstellung der Wechselsperrkulisse ist die Bewegung des Schalt-Stellgliedes entweder nur in Wähl- oder nur in Schaltrichtung freigegeben. Eine Sensorik zum positionsrichtigen Umsteuern der Wechselsperrkulisse kann zur Minimierung von Systemtoleranzen in die Wechselsperrkulisse gelegt werden. Des weiteren kann die Wechselsperrkulisse so angesteuert werden, daß der beim Richtungswechsel zwischen Schalten und Wählen erzeugte Impuls abgefangen und so die mechanische Belastung gering gehalten wird.

Die Erfindung ist nachstehend anhand von zwei in der Zeichnung schematisch dargestellten Ausführungsformen näher beschrieben. In der Zeichnung bedeuten
- Fig. 1: eine Schaltvorrichtung nach der Erfindung in einer ersten Ausführungsform, dargestellt in Form eines die Zentralachse enthaltenden Axialschnittes nach Linie I-I in Figur 3,
- Fig. 2: einen Querschnitt der Schaltvorrichtung von Fig.1 nach Linie II-II,
- Fig. 3: die Schaltvorrichtung der Figur 1, dargestellt in Form eines die Zentralachse enthaltenden Axialschnittes nach Linie III-III,

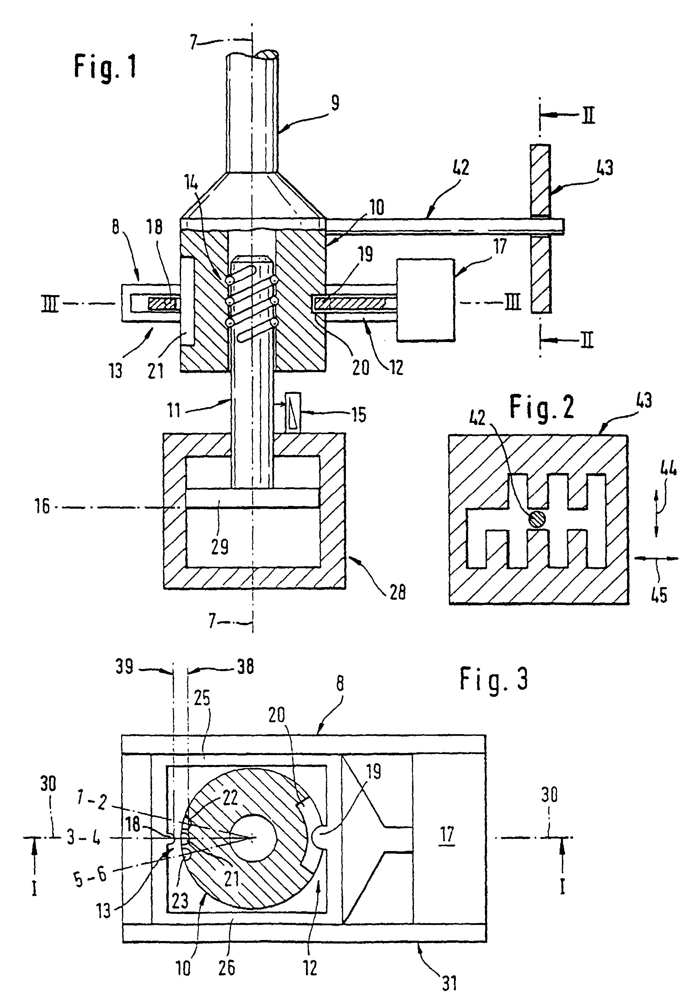

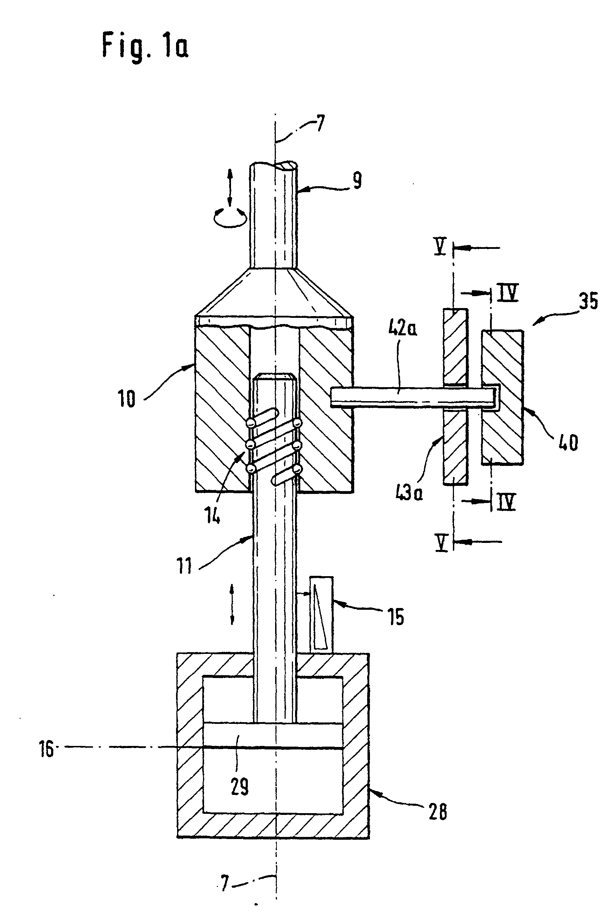

- Fig.1a: eine Schaltvorrichtung nach der Erfindung in einer zweiten Ausführungsform in einer der Figur 1 entsprechenden Darstellung,

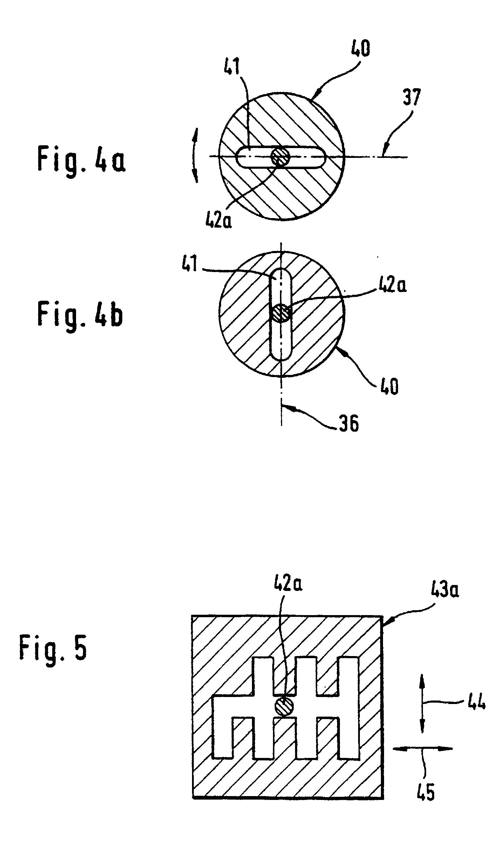

- Fig.4a: einen Teil-Längsschnitt durch die Schaltvorrichtung der Figur 1a nach Linie IV-IV in einem ersten Schaltzustand,
- Fig.4b: einen Teil-Längsschnitt durch die Schaltvorrichtung der Figur 1a nach Linie IV-IV in einem zweiten Schaltzustand, und
- Fig. 5: einen Teil-Längsschnitt durch die Schaltvorrichtung der Figur 1a nach Linie V-V.

### Zur ersten Ausführungsform der Fign. 1 bis 3:

Zu einer Zentralachse 7 - 7 eines nicht näher dargestellten Gehäuses 8 eines ebenfalls nicht näher dargestellten Zahnräderwechselgetriebes sind ein Schalt-Stellglied 9 in Form einer Welle, ein Wähl-Stellglied 10 in Form einer Hohlwelle oder Hülse, ein stangenförmiges Stellglied 11 sowie ein Druckmittel-Stellmotor 28 mit einem doppeltwirkenden Axialkolben 29 koaxial angeordnet.

Das Schalt-Stellglied 9 ist gegenüber dem Wähl-Stellglied 10 bewegungsfest bzw. einteilig ausgebildet. Das Wähl-Stellglied 10 ist durch ein Hilfsgetriebe 14 in Form eines Schraubgetriebes zur Umwandlung einer hin- und hergehenden Bewegung in eine Drehbewegung mit dem ausschließlich axial verschiebbar gegenüber dem Gehäuse 8 angeordneten Stellglied 11 verbunden, welches seinerseits mit dem Axialkolben 29 in bewegungsfester Verbindung steht.

Das Schalt-Stellglied 9 ist in eine signifikante Drehwinkelstellung betätigbar (Fig.3), in welcher eine Axialnut 21 am Außenumfang des Wähl-Stellgliedes 10 in einer die Zentralachse 7 - 7 enthaltenden Bezugsebene 30 - 30 des Gehäuses 8 liegt. Die Axialnut 21 ist der Schaltgasse 3 - 4 zum wahlweisen Schalten der Vorwärtsgänge 3 und 4 so zugeordnet, daß durch eine Betätigung des Schalt-Stellgliedes 9 in der signifikanten Drehwinkelstellung in den Richtungen der Zentralachse 7 - 7 der Vorwärtsgang 3 oder 4 entweder ein- oder ausgerückt wird.

Das Schalt-Stellglied 9 ist in eine weitere signifikante Drehwinkelstellung betätigbar (Fig.3), in welcher eine Axialnut 22 am Außenumfang des Wähl-Stellgliedes 10 in der Bezugsebene 30 - 30 liegt. Die Axialnut 22 ist der Schaltgasse 1 - 2 zum wahlweisen Schalten der Vorwärtsgänge 1 und 2 so zugeordnet, daß durch eine Betätigung des in der signifikanten Drehwinkelstellung stehenden Schalt-Stellgliedes 9 in den Richtungen der Zentralachse 7 - 7 der Vorwärtsgang 1 oder 2 entweder ein- oder ausgerückt wird.

Das Schalt-Stellglied 9 ist in eine dritte signifikante Drehwinkelstellung betätigbar (Fig.3), in welcher eine Axialnut 23 am Außenumfang des Wähl-Stellgliedes 10 in der Bezugsebene 30 - 30 liegt. Die Axialnut 23 ist der Schaltgasse 5 - 6 zum wahlweisen Schalten der Vorwärtsgänge 5 und 6 so zugeordnet, daß durch eine Betätigung des in der signifikanten Drehwinkelstellung stehenden Schalt-Stellgliedes 9 in den Richtungen der Zentralachse 7 - 7 der Vorwärtsgang 5 oder 6 entweder ein- oder ausgerückt wird.

Zum Betätigen des Schalt-Stellgliedes 9 in die jeweilige signifikante Drehwinkelstellung wird das Wähl-Stellglied 10 in den Richtungen der Zentralachse 7 - 7 durch eine ein- und ausrückbare Feststellvorrichtung 12 gegenüber dem Gehäuse 8 festgelegt, wobei ein Feststelleingriffsglied 19 in eine Umfangsnut 20 am Außenumfang des Wähl-Stellgliedes 10 so eingerückt ist, daß das Wähl-Stellglied 10 ausschließlich axial unverschiebbar festgelegt ist.

Zum Betätigen des Schalt-Stellgliedes 9 in den Richtungen der Zentralachse 7 - 7 zum Schalten der Gänge wird die Feststellrichtung 12 ausgerückt und eine mit dem Wähl-Stellglied 10 verbundene Bremse 13 eingerückt, wobei ein Bremseingriffsglied 18 in die jeweils in der Bezugsebene 30 - 30 liegende Axialnut 21 bzw. 22 bzw. 23 drehfest, jedoch axialverschiebbar relativ zum Wähl-Stellglied 10 eingreift.

Der Axialkolben 29 weist eine signifikante Hub-Stellung 16 auf, in welcher das Schalt-Stellglied 9 im unbetätigten Zustand eine durch Rückstellfedern zentrierte Ruhestellung am Übergang zwischen einer vorbestimmten Schaltgasse und einer neutralen Wählgasse des Schaltbildes eines Handschalthebels einnimmt. In der Ruhestellung befindet sich das Schalt-Stellglied 9 in der signifikanten Drehwinkelstellung der vorbestimmten Schaltgasse, wobei das Bremseingriffsglied 18 in die zugehörige Axialnut 21 eingreift.

Um sicherzustellen, daß die Feststellvorrichtung 12 und die Bremse 13 nur in der signifikanten Hub-Stellung 16 des Axialkolbens 29 betätigbar sind, ist ein die Hub-Stellung 16 anzeigender Wegsensor 15 mit einer einen Stellmotor 17 der Bremse 13 steuernden, jedoch nicht näher dargestellten Einrichtung verbunden.

Bei der Schaltvorrichtung der ersten Ausführungsform ist die Umfangsnut 20 der Feststellvorrichtung 12 gegenüber den Axialnuten 21 bis 23 der Bremse 13 diametral in bezug auf die Zentralachse 7 - 7 angeordnet, wobei das Bremseingriffsglied 18 und das Feststelleingriffsglied 19 durch wenigstens ein das Wähl-Stellglied 10 umgreifendes bügelförmiges Gestänge 25 und/oder 26 miteinander verbunden und die Gestänge in einer zum Gehäuse 8 bewegungsfesten rahmenartigen Führung 31 parallel zur Bezugsebene 30- 30 verschiebbar geführt sind.

Die Gestänge-Koppelung zwischen Feststellvorrichtung 12, Bremse 13 und Stellmotor 17 ist so getroffen, daß das Wähl-Stellglied 10 gegenüber dem Gehäuse 8 entweder ausschließlich axial unbeweglich oder ausschließlich drehfest angeordnet ist.

Bewegungsfest zum Schalt-Stellglied 9 und radial zur Zentralachse 7-7 ist ein Kulissenstift 42 angeordnet, welcher in einer stationären Schaltkulisse 43 geführt ist, welche entsprechend dem Schaltbild eines Handschalthebels ausgebildet ist.
Die Wirkungsweise der Schaltvorrichtung ist nachstehend anhand eines Schaltablaufes erläutert.

Bei einer Hochschaltung vom zweiten Gang in den dritten Gang nimmt das Schalt-Stellglied 9 zunächst diejenige Drehwinkelstellung ein, bei welcher die der Schaltgasse 1 - 2 zugeordnete Axialnut 22 in der Bezugsebene 30 - 30 liegt und das Bremseingriffsglied 18 aufnimmt. Durch Steuerung des Stellmotores 28 in seine signifikante Hub-Stellung 16 wird der zweite Gang ausgerückt und das Schalt-Stellglied 9 in die Wählgasse in Richtung der Zentralachse 7 - 7 verlagert.
Beim Erreichen der signifikanten Hub-Stellung 16 steuert der Wegsensor 15 den Stellmotor 17 der Bremse 13 um, so daß das Wähl-Stellglied 10 durch die Feststellvorrichtung 12 in den Längsrichtungen der Zentralachse 7 - 7 gegenüber dem Gehäuse 8 festgelegt wird. Eine sich anschließende gezielte Betätigung des Stellgliedes 11 durch den Stellmotor 28 führt zu einer Drehbewegung des Schalt-Stellgliedes 9 in diejenige signifikante Drehwinkelstellung, in welcher die der Schaltgasse 3 - 4 zugeordnete Axialnut 21 in der Bezugsebene 30 - 30 liegt.
Beim Erreichen dieser Drehwinkelstellung durch das Schalt-Stellglied 9 wird der Stellmotor 17 wieder umgesteuert, wodurch das Bremseingriffsglied 18 in die Axialnut 21 einrückt und das Feststelleingriffsglied 19 aus der Umfangsnut 20 ausrückt. Beim Erreichen dieser Stellung durch den Stellmotor 17 wird das Schalt-Stellglied 9 durch den Stellmotor 28 in den Richtungen der Zentralachse 7 - 7 über die Wählgasse hinaus weiter betätigt und dadurch der dritte Gang eingelegt.

Durch diese Kulissenführung 42,43 für das Schalt-Stellglied 9 wird gewährleistet, daß das Umschalten zwischen Wählen 45 und Schalten 44 nur in den vom inneren Aufbau des Getriebes vorgegebenen Positionen erfolgen kann.

### Zur besonderen Ausführungsform der Fign.1a,4a,4b und 5:

Bewegungsfest zum Schalt-Stellglied 9 und radial zur Zentralachse 7-7 ist ein Kulissenstift 42a angeordnet, welcher in einer stationären Schaltkulisse 43a - welche entsprechend dem Schaltbild eines Handschalthebels ausgebildet ist - geführt und mit einer Wechselsperrkulisse 35 zwangsgekoppelt ist. Diese Wechselsperrkulisse 35 weist eine zwischen zwei Drehwinkelendstellungen 36,37 umsteuerbare Kulissenscheibe 40 mit einem geradlinig verlaufenden Kulissenschlitz 41 für den Kulissenstift 42a auf. In der Drehwinkelstellung 36 weist der Kulissenstift 42a eine solche Lage gegenüber der stationären Schaltkulisse 43a auf, daß die Wählbewegungen 45 des Kulissenstiftes 42a entlang eines Kulissenwählabschnittes gesperrt und die Schaltbewegungen 44 des Kulissenstiftes 42a freigegeben sind. In der Drehwinkelendstellung 37 der Kulissenscheibe 40 weist der Kulissenschlitz 41 eine solche Lage gegenüber der Schaltkulisse 43a auf, daß die Schaltbewegungen 44 des Kulissenstiftes 42a entlang eines jeweiligen Kulissenschaltabschnittes gesperrt und die Wählbewegungen 45 des letzteren freigegeben sind.

Die Wechselsperrkulisse 35 wird oder ist in die Drehwinkelendstellung 36 betätigt, wenn der Kulissenstift 42a die den zu schaltenden Gang enthaltende Schaltgasse erreicht oder sich in letzterer befindet.

Die Wechselsperrkulisse 35 wird oder ist in die Drehwinkelendstellung 37 betätigt, wenn der Kulissenstift 42a sich im Kulissenwählabschnitt - jedoch nicht im Bereich der den zu schaltenden Gang enthaltenden Schaltgasse befindet.

Die Umsteuerung der Wechselsperrkulisse 35 erfolgt in der gleichen Weise wie die Umsteuerung der Brems- und Feststellvorrichtung 12/13 der ersten Ausführungsform, wobei der Endstellung 38 in Figur 3 die Drehwinkelendstellung 36 in Figur 4b und die Endstellung 39 in Figur 3 der Drehwinkelendstellung 37 in Figur 4a entspricht.

Infolgedessen wirkt sich eine Betätigung des Schalt-Stellgliedes 9 durch den Axialkolben 29 über das Schraubgetriebe 14 bei beiden Ausführungsformen in der gleichen Weise aus.

## Patentansprüche

1. Schaltvorrichtung für ein Zahnräderwechselgetriebe,
- mit einem in bezug auf eine Zentralachse (7-7) eines Gehäuses (8) drehbar und axial verschiebbar angeordneten Schalt-Stellglied (9),
- mit einem in bezug auf die Zentralachse (7-7) koaxialen Wähl-Stellglied (10), das relativ zum Gehäuse (8) drehbar angeordnet ist,
- mit einem in bezug auf die Zentralachse (7-7) koaxialen Stellglied (11), das relativ zum Gehäuse (8) ausschließlich axial verschiebbar angeordnet ist,
- mit Mitteln zur Festlegung des Wähl-Stellgliedes (10) gegenüber dem Gehäuse (8) in den Längsrichtungen der Zentralachse (7-7),
- mit einer ein- und ausrückbaren Bremse (13) zur Festlegung des Wähl-Stellgliedes (10) gegenüber dem Gehäuse (8) in den Umfangsrichtungen der Zentralachse (7-7),
- mit einem Hilfsgetriebe (14) zur Umwandlung einer hin- und hergehenden Bewegung in eine Drehbewegung,
und bei der zwei der drei Stellglieder (Schalt-Stellglied 9, Wähl-Stellglied 10) sowohl zueinander zumindest in den Längsrichtungen der Zentralachse (7-7) bewegungsfest angeordnet als auch durch das Hilfsgetriebe (14) mit dem dritten Stellglied (11) verbunden sind und eine ein- und ausrückbare Feststellvorrichtung (12) wirkungsmäßig sowohl mit dem Wähl-Stellglied (10) als auch mit der Bremse (13) so verbunden ist, daß das Wähl-Stellglied (10) gegenüber dem Gehäuse (8) wechselweise entweder ausschließlich in den Umfangsrichtungen oder ausschließlich in den Längsrichtungen der Zentralachse (7-7) festlegbar ist, und bei der das Wähl-Stellglied (10) mit dem ausschließlich axial verschiebbar gegenüber dem Gehäuse (8) angeordneten Stellglied (11) durch das Hilfsgetriebe (14) verbunden ist,
**dadurch gekennzeichnet,**
**daß** ein Kulissenstift (42) in einer stationären Schaltkulisse (43) geführt ist, welche das Schaltbild eines Handschalthebels abbildet, und daß der Kulissenstift (42) bewegungsfest zum Schalt-Stellglied (9) sowie radial zur Zentralachse (7-7) angeordnet ist.

2. Schaltvorrichtung nach Patentanspruch 1,
**dadurch gekennzeichnet,**
**daß** ein Sensor (15) zur Ermittlung einer signifikanten mittleren Stellung (16) des ausschließlich axial verschiebbar gegenüber dem Gehäuse (8) angeordneten Stellgliedes (11) angeordnet ist und mit einem Stellmotor (17) zum Betätigen der Bremse (13) so zusammenarbeitet, daß die Bremse (13) ausschließlich in der signifikanten Stellung (16) des Stellgliedes (11) ein- und ausrückbar ist.

3. Schaltvorrichtung nach Patentanspruch 1 oder 2,
**dadurch gekennzeichnet,**
**daß** das Wähl-Stellglied (10) eine zur Zentralachse (7 - 7) zentrische Umfangsnut (20) aufweist, in welche ein gegenüber einem ein- und ausrückbaren Bremseingriffsglied (18) der Bremse (13) bewegungsfest angeordnetes Feststelleingriffsglied (19) der Feststellvorrichtung (12) einrückbar ist.

4. Schaltvorrichtung nach Patentanspruch 3,
**dadurch gekennzeichnet,**
**daß** die Umfangsnut (20) gegenüber Axialnuten (21 bis 23) des Wähl-Stellgliedes (10), in welche das Bremseingriffsglied (18) einrückbar ist, diametral zur Zentralachse (7 - 7) angeordnet ist, und daß das Bremseingriffsglied (18) und das Feststelleingriffsglied (19) durch wenigstens ein das Wähl-Stellglied (10) umgreifendes bügelförmiges Gestänge (25 und/oder 26) verbunden sind.

5. Schaltvorrichtung nach Patentanspruch 1 oder 2,
**dadurch gekennzeichnet,**
**daß** das Schalt-Stellglied (9) mit einer als Bremse und Feststellvorrichtung ausgebildeten Wechselsperrkulisse (35) bewegungsabhängig verbunden ist, die zwischen zwei Endstellungen (36,37) umsteuerbar ist, und daß die Drehbewegungen (45) des Schalt-Stellgliedes (9) in der einen Endstellung (36) und die hin- und hergehenden Bewegungen (44) des Schalt-Stellgliedes (9) in der anderen Endstellung (37) der Wechselsperrkulisse (35) unter Vermittlung eines Kulissenstiftes (42a) gesperrt sind, der mit dem Schaltstellglied (9) verbunden ist und in die Wechselsperrkulisse (35) eingreift.

6. Schaltvorrichtung nach Patentanspruch 5,
**dadurch gekennzeichnet,**
**daß** die Wechselsperrkulisse (35) eine zwischen zwei um 90° zueinander versetzte Drehwinkelendstellungen (36,37) betätigbare Kulissenscheibe (40) mit einem geradlinig verlaufenden Kulissenschlitz (41) aufweist, welcher in der einen Drehwinkelendstellung (36) die Wählbewegungen und in der anderen Drehwinkelendstellung (37) die Schaltbewegungen des Schalt-Stellgliedes (9) sperrt.

7. Schaltvorrichtung nach Patentanspruch 6,
**dadurch gekennzeichnet,**
**daß** der Kulissenstift (42a) der stationären Schaltkulisse (43a) zusätzlich in den Kulissenschlitz (41) der Wechselsperrkulisse (35) eingreift.

8. Schaltvorrichtung nach einem der Patentansprüche 1 bis 7, **dadurch gekennzeichnet,**
**daß** für das Hilfsgetriebe (14) ein Schraubgetriebe verwendet ist.

9. Schaltvorrichtung nach einem der Patenansprüche 1 bis 8,
**dadurch gekennzeichnet,**
**daß** das ausschließlich axial verschiebbar gegenüber dem Gehäuse (8) angeordnete Stellglied (11) mit einem Druckmittel-Stellmotor (28) der Axialkolben-Bauart verbunden ist.

10. Schaltvorrichtung nach einem der Patentansprüche 1 bis 9,
**dadurch gekennzeichnet,**
**daß** der Stellmotor (17) zur Festlegung des Wähl-Stellgliedes (10) gegenüber dem Gehäuse (8) in den Umfangsrichtungen der Zentralachse (7-7) als Elektromagnet ausgebildet ist.

## Claims

1. A shift device for a geared manual transmission
- with a shift control element (9) which is positioned in such a manner that it can be moved both rotationally and axially in relation to a central axis (7-7) of a housing (8),
- with a selector control element (10) coaxial to the central axis (7 - 7) which is positioned in such a manner that it can be moved rotationally in relation to the housing (8),
- with a control element (11) coaxial to the central axis (7 - 7) which is positioned in such a manner that it can be moved exclusively axially in relation to the housing (8),
- with means of fixing the selector control element (10) in relation to the housing (8) along the central axis (7 - 7),
- with a brake (13) which can be engaged and disengaged to fix the selector control element (10) in relation to the housing (8) around the central axis (7 - 7),
- with an auxiliary gear (14) to convert a back and forth movement into a rotational movement,
and in which two of the three control elements (the shift control element (9) and the selector control element (10)) are both positioned in relation to one another in such a manner that they cannot move at least along the central axis (7 - 7) and connected to the third control element (11) by means of the auxiliary gear (14) and a fixing device (12) which can be engaged and disengaged is connected actively both to the selector control element (10) and to the brake (13) in such a manner that the selector control element (10) can be fixed in relation to the housing (8) either exclusively around or exclusively along the central axis (7 - 7), and in which the selector control element (10) is connected to the control element (11) which is positioned in such a manner that it can move exclusively axially in relation to the housing (8) by means of the auxiliary gear (14),
**characterised in that**
a gate pin (42) runs along a stationary shift gate (43) which illustrates the shift pattern of a manual gearshift lever, and the gate pin (42) is positioned in such a manner that it is unable to move in relation to the shift control element (9) and radially in relation to the central axis (7 - 7).

2. A shift device in accordance with claim 1,
**characterised in that**
a sensor (15) is positioned so as to be able to determine a significant mean position (16) of the control element (11) positioned in such a manner that it can move exclusively axially in relation to the housing (8) and works together with a servomotor (17) to actuate the brake (13) in such a manner that the brake (13) can be engaged and disengaged only in the significant position (16) of the actuator (11).

3. A shift device in accordance with claim 1 or 2,
**characterised in that**
the selector control element (10) has a peripheral channel (20) centrical to the central axis (7 - 7) in which can be engaged a fixing engaging member (19) on the fixing device (12) which cannot be moved in relation to a brake engaging device (18) on the brake (13) which itself can be engaged and disengaged.

4. A shift device in accordance with claim 3,
**characterised in that**
in relation to axial channels (21 to 23) in the selector control element (10) in which the brake engaging member (18) can engage, the peripheral channel (20) is positioned diametrically in relation to the central axis (7-7) and that the brake engaging member (18) and the fixing engaging member (19) are connected by means of at least one bracket-shaped rod assembly (25 and/or 26) encompassing the selector control element (10).

5. A shift device in accordance with claim 1 or 2,
**characterised in that**
the shift control element (9) is connected in a motionally dependent manner to a shift blocking gate (35) which is designed as a brake and fixing device and can be moved between two end positions (36, 37), and that the rotational movements (45) of the shift control element (9) are blocked in one end position (36) and the back and forth movements (44) of the shift control element (9) are blocked in the other end position (37) of the shift blocking gate (35) by means of a gate pin (42a) which is connected to the shift control element (9) and engages in the shift blocking gate (35).

6. A shift device in accordance with claim 5,
**characterised in that**
the shift blocking gate (35) has a gate disk (40) which can be actuated between two rotated end positions (36, 37) 90° apart and a gate slot (41) which runs in a straight line and blocks the selector movements in one rotated end position (36) and the shift movements of the shift control element (9) in the other rotated end position (37).

7. A shift device in accordance with claim 6,
**characterised in that**
the gate pin (42a) on the stationary shift gate (43a) also engages in the gate slot (41) in the shift blocking gate (35).

8. A shift device in accordance with one of claims 1 to 7,
**characterised in that**
a helical gear is used as the auxiliary gear (14).

9. A shift device in accordance with one of claims 1 to 8,
**characterised in that**
the control element (11) which is positioned in such a manner that it can be moved exclusively axially in relation to the housing (8) is connected to a hydraulic servomotor (28) of axial piston design.

10. A shift device in accordance with one of claims I to 9,
**characterised in that**
the servomotor (17) is designed as an electromagnet to fix the selector control element (10) in relation to the housing (8) around the central axis (7 - 7).

## Revendications

1. Dispositif de commande d'une boîte de vitesses à engrenages, comportant
- un organe de positionnement de commande (9) agencé mobile en rotation par rapport à un axe central (7-7) d'un carter (8) et mobile en translation axiale,
- un organe de positionnement de sélection (10) coaxial par rapport à l'axe central, qui est agencé mobile en rotation par rapport au carter (8),
- un organe de positionnement (11) coaxial par rapport à l'axe central (7-7), qui est agencé mobile exclusivement en translation axiale par rapport au carter,
- des moyens pour fixer l'organe de positionnement de sélection (10) par rapport au carter (8) dans les directions longitudinales de l'axe central (7-7),
- un frein (13) susceptible d'être engagé et dégagé pour fixer l'organe de positionnement de sélection (10) par rapport au carter (8) dans les directions périphériques de l'axe central (7-7),
- une transmission auxiliaire (14) pour convertir un mouvement en va-et-vient en un mouvement de rotation,
et dans lequel deux organes de positionnement parmi les trois (organe de positionnement de commande 9, organe de positionnement de sélection 10) sont à la fois agencés solidairement vis-à-vis du mouvement l'un par rapport à l'autre du moins dans les directions longitudinales de l'axe central (7-7) et reliés au troisième organe de positionnement (11) par la transmission auxiliaire (14),
et dans lequel un dispositif d'arrêt (12) susceptible d'être engagé et dégagé est relié, en termes d'action, aussi bien à l'organe de positionnement de sélection (10) qu'au frein (13), de telle sorte que l'organe de positionnement de sélection (10) peut être fixé par rapport au carter (8) en alternance soit exclusivement dans les directions périphériques soit exclusivement dans les directions longitudinales de l'axe central (7-7),
et dans lequel l'organe de positionnement de sélection (10) est relié via la transmission auxiliaire (14) à l'organe de positionnement (11) agencé mobile exclusivement en translation axiale par rapport au carter (8),
**caractérisé en ce qu'**une tige de coulisse (42) est guidée dans une coulisse de changement de vitesses stationnaire (43) qui représente le schéma de changement de vitesses d'un levier de changement de vitesses manuel, et **en ce que** la tige de coulisse (42) est agencée de façon stationnaire par rapport à l'organe de positionnement de commande (9) ainsi que radialement par rapport à l'axe central (7-7).

2. Dispositif de commande selon la revendication 1, **caractérisé en ce qu'**un détecteur (15) est agencé pour détecter une position médiane significative (16) de l'organe de positionnement (11) agencé mobile exclusivement en translation axiale par rapport au carter (8) et coopère avec un servomoteur (17) pour actionner le frein (13), de telle sorte que le frein (13) est susceptible d'être engagé et dégagé exclusivement dans la position significative (16) de l'organe de positionnement (11).

3. Dispositif de commande selon l'une ou l'autre des revendications 1 et 2, **caractérisé en ce que** l'organe de positionnement de sélection (10) comprend une gorge périphérique (20) centrée sur à l'axe central (7-7), dans laquelle peut venir s'engager un organe d'engagement d'arrêt (19) du dispositif d'arrêt (12), qui est agencé solidairement vis-à-vis du mouvement par rapport à un organe d'engagement (18), susceptible d'être engagé et dégagé, du frein (13).

4. Dispositif de commande selon la revendication 3, **caractérisé en ce que** la gorge périphérique (20) est agencée, par rapport à l'axe central (7-7), diamétralement à l'opposé de gorges axiales (21 à 23) de l'organe de positionnement de sélection (10), dans lesquelles peut venir s'engager l'organe d'engagement de frein (18), et **en ce que** l'organe d'engagement de frein (18) et l'organe d'engagement d'arrêt (19) sont reliés par au moins une tringlerie (25 et/ou 26) en forme d'étrier entourant l'organe de positionnement de sélection (10).

5. Dispositif de commande selon l'une des revendications 1 et 2, caractérisé en ce l'organe de positionnement de commande (9) est relié avec dépendance vis-à-vis du mouvement à une coulisse de blocage réversible (35) qui est réalisée sous forme de frein et de dispositif d'arrêt et qui est réversible entre deux positions finales (36, 37), et en ce que les mouvements de rotation (45) de l'organe de positionnement de commande (9) sont bloqués dans l'une des positions finales (36) de la coulisse de blocage réversible (35) et les mouvements en va-et-vient (44) de l'organe de positionnement de commande (9) sont bloqués dans l'autre position finale (37) par l'intermédiaire d'une tige de coulisse (42a) qui est reliée à l'organe de positionnement de commande (9) et qui s'engage dans la coulisse de blocage réversible (35).

6. Dispositif de commande selon la revendication 5, **caractérisé en ce que** la coulisse de blocage réversible (35) comprend un disque de coulisse (40) qui peut être actionné entre deux positions angulaires finales (36, 37) décalées de 90° l'une de l'autre et qui comprend une fente de coulisse rectiligne (41) qui bloque les mouvements de sélection de l'organe de positionnement de commande (9) dans l'une des positions angulaires finales (36) et qui bloque les mouvements de commande dudit organe dans l'autre position angulaire finale (37).

7. Dispositif de commande selon la revendication 6, **caractérisé en ce que** la tige de coulisse (42a) de la coulisse de commande stationnaire (43a) s'engage en supplément dans la fente (41) de la coulisse de blocage réversible (35).

8. Dispositif de commande selon l'une des revendications 1 à 7, **caractérisé en ce que** la transmission auxiliaire (14) est formée par une transmission hélicoïdale.

9. Dispositif de commande selon l'une des revendications 1 à 8, **caractérisé en ce que** l'organe de positionnement (11) agencé mobile exclusivement en translation axiale par rapport au carter (8) est relié à un servomoteur à fluide sous pression (28) du type à piston axial.

10. Dispositif de commande selon l'une des revendications 1 à 9, **caractérisé en ce que** le servomoteur (17) est réalisé sous forme d'électroaimant pour l'immobilisation de l'organe de positionnement de sélection (10) par rapport au carter (8) dans les directions périphériques de l'axe central (7-7).
